# FASCICULE DE BREVET EUROPEEN

(11) **EP 1 028 016 B1**
(45) Date de publication et mention de la délivrance du brevet: **07.09.2005**
(21) Numéro de dépôt: 00400368.7
(22) Date de dépôt: 09.02.2000
(51) Int. Cl.: B60J 5/10

(54) **Ouvrant arrière de véhicule automobile, monté pivotant autour d'un axe horizontal au voisinage de son bord inférieur**
Heckklappe für Motorfahrzeug, schwenkbar angeordnet um eine horizontale Achse, in der Nähe ihrer Unterkante
Hatchback for motor vehicle, hinged about a horizontal axis near its bottom edge

(30) Priorité: 12.02.1999 FR 9901715
(43) Date de publication de la demande: 16.08.2000
(73) Titulaire: COMPAGNIE PLASTIC OMNIUM, 69007 Lyon (FR)
(72) Inventeur: Pommeret, Maelig, 01100 Oyonnax (FR)
(74) Mandataire: Remy, Vincent Noel Paul

(56) Documents cités:
- EP-A- 0 835 775
- FR-A- 2 748 241
- FR-A- 2 748 969
- US-A- 2 631 880
- US-A- 3 398 985
- US-A- 3 612 601

## Description

La présente invention concerne un ouvrant arrière de véhicule automobile, monté pivotant autour d'un axe horizontal au voisinage de son bord inférieur.

Un tel ouvrant équipe généralement un véhicule de type tous terrains, dont l'ouverture arrière est obturée dans sa partie supérieure par un hayon qui s'étend du toit jusqu'à une certaine hauteur et dans sa partie inférieure par un ouvrant du type de celui qui fait l'objet de la présente invention, qui prolonge le hayon jusqu'au plancher du véhicule.

A titre d'exemple d'un tel ouvrant on peut se référer au document US A 3 398 985.

On comprend qu'un tel ouvrant est très fragile en position ouverte car il se trouve en porte-à-faux, ce qui oblige à le concevoir en métal, avec une structure dictée par un souci de robustesse excluant toute autre caractéristique fonctionnelle ou décorative.

On connaît par la demande de brevet FR 2 748 969, représentant l'état de la technique le plus proche, un abattant comportant des façades intérieure et extérieure définissant un caisson recevant une vitre.

On connaît également par la demande de brevet EP 0 835 775 une porte arrière montée pivotante autour d'un axe sensiblement vertical.

La présente invention vise à fournir un ouvrant arrière de véhicule automobile qui, en plus d'être robuste comme sa fonction le requiert, présente une structure lui permettant d'offrir d'autres fonctions que la seule fermeture.

La présente invention a pour objet un ouvrant arrière de véhicule automobile, du type destiné à être installé sur un véhicule automobile en étant monté pivotant autour d'un axe horizontal situé à proximité de son bord inférieur, entre une position fermée dans laquelle il obture au moins partiellement l'accès à l'intérieur du véhicule et une position ouverte dans laquelle il est sensiblement horizontal et libère l'accès à l'intérieur du véhicule, caractérisé par le fait qu'il comprend un panneau extérieur d'aspect et un panneau intérieur structurel, ledit panneau intérieur étant réalisé en matière plastique.

Avantageusement le panneau intérieur présente une forme en relief, comprenant notamment des nervures, et présente une structure rigide.

L'ouvrant selon l'invention présente l'originalité d'être résistant grâce à sa structure incorporant un panneau intérieur structurel, tout en étant d'une réalisation simple et peu onéreuse du fait que ses deux panneaux peuvent être facilement fabriqués par moulage.

De préférence, on utilise du polypropylène mélangé à des fibres de verre ou une matière plastique thermodurcissable pour réaliser le panneau intérieur et une matière thermoplastique pour réaliser le panneau extérieur, lequel subit ensuite éventuellement un traitement de peinture.

Dans un mode de réalisation particulier de l'invention, l'ouvrant comporte, entre le panneau extérieur et le panneau intérieur, un renfort métallique qui reprend une partie des efforts s'exerçant sur l'ouvrant.

L'ouvrant de l'invention offre l'avantage que le panneau intérieur en matière plastique peut réaliser des fonctions autres que la seule fonction de fermeture, ce qui permet d'utiliser l'ouvrant à d'autres fins, qu'il soit en position ouverte ou fermée.

Dans un mode de réalisation préféré, le panneau intérieur de l'ouvrant comporte des logements aptes à recevoir des modules qui s'intègrent au moins partiellement dans l'épaisseur de l'ouvrant et procurent des fonctions spécifiques.

Comme exemples de modules, on peut notamment citer un siège pour s'asseoir sur l'ouvrant en position ouverte, un rangement disponible en positions ouverte et fermée de l'ouvrant, lequel rangement peut notamment contenir des outils ou du matériel de premier secours, une glacière pour maintenir des aliments au frais, un réchaud pour chauffer des aliments, une table utilisable en position ouverte de l'ouvrant.

Les modules sont de préférence au nombre de deux et sont répartis de chaque côté d'un montant central réalisé dans le panneau intérieur pour le rigidifier dans la région de la serrure.

Dans une variante préférée de ce mode de réalisation, le panneau intérieur comporte un moyen de rétention des modules dans leurs logements, ce moyen de rétention étant déverrouillable.

Ce moyen de rétention peut par exemple consister en une glissière et un loquet.

Dans un mode de réalisation particulier de l'invention, le panneau extérieur de l'ouvrant supporte une platine articulée autour d'un axe horizontal qui permet à ladite platine de pivoter par rapport à l'ouvrant pour demeurer en position verticale lorsque l'ouvrant pivote de sa position verticale fermée à sa position horizontale ouverte.

Cette platine est destinée à supporter la plaque minéralogique du véhicule et permet d'utiliser ce dernier en laissant l'ouvrant ouvert, par exemple pour transporter des objets encombrants, tout en conservant la plaque minéralogique visible, conformément à la législation en vigueur.

Dans le but de mieux faire comprendre l'invention, on va en décrire maintenant des modes de réalisation donnés à titre d'exemples non limitatifs, en référence au dessin annexé dans lequel :
- la figure 1 est une vue en perspective de trois quarts arrière d'un véhicule automobile,
- la figure 2 est une vue en perspective éclatée de l'ouvrant du hayon de la figure 1,
- la figure 3 est une vue en coupe selon III-III de la figure 2,
- les figures 4A à 4D sont des vues en coupe selon III-III illustrant la cinématique d'encliquetage des modules dans l'ouvrant inférieur,
- la figure 5 est une vue en section selon V-V de la figure 4D,
- la figure 6 est une vue en perspective et en coupe selon VI-VI de la figure 5,
- la figure 7 est une vue en élévation de côté de l'arrière d'un autre véhicule muni d'un ouvrant selon l'invention,
- la figure 8 est une vue analogue à la figure 5 montrant l'ouvrant en position ouverte,
- la figure 9 représente une platine supportant une plaque minéralogique appartenant à l'ouvrant des figures 5 et 6,
- la figure 10 est une vue en perspective de trois quarts arrière d'un autre véhicule automobile.

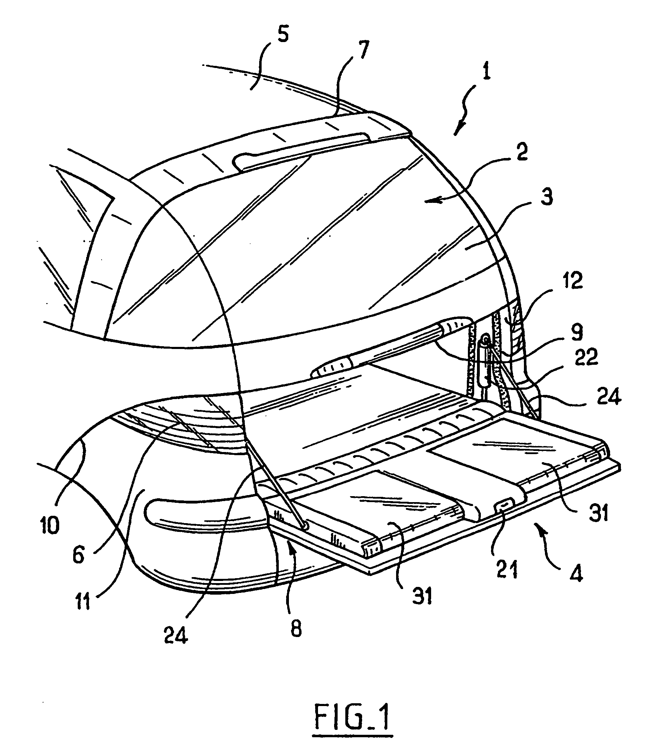

Sur la figure 1, on voit l'arrière d'un véhicule automobile 1 de type mono-corps, qui comporte une ouverture arrière 2 donnant accès à l'habitacle. Cette ouverture est obturée par un hayon 3 dans sa partie supérieure et par un ouvrant 4 dans sa partie inférieure.

Le hayon 3 s'étend du toit 5 du véhicule jusqu'à hauteur des feux arrière 6 et est articulé, le long de son bord supérieur 7, par des charnières (non visibles) qui permettent son pivotement autour d'un axe horizontal.

L'ouvrant inférieur 4 est articulé autour de charnières (non visibles) situées au voisinage de son bord inférieur 8, lesquelles charnières permettent son pivotement autour d'un axe horizontal.

Le hayon 3 et l'ouvrant 4 se rejoignent, en position fermée, le long d'une ligne de raccord 9 prolongeant une ligne de style 10 qui prend naissance dans les ailes 11 du véhicule et borde les limites supérieures des feux 6.

En position ouverte du hayon et de l'ouvrant, l'accès à l'habitacle est complètement libéré, le hayon et l'ouvrant s'étendant sensiblement horizontalement.

Sur la figure 1, seul l'ouvrant 4 est ouvert, le hayon 3 étant fermé et maintenu dans cette position par une serrure centrale 24 se trouvant sur l'ouvrant inférieur.

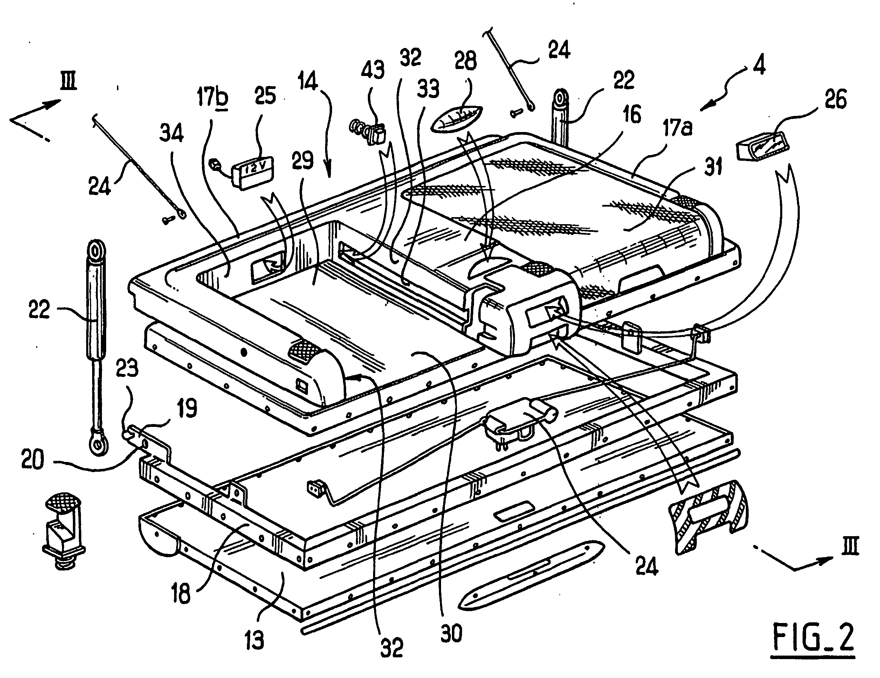

La figure 2 montre la structure de l'ouvrant 4.

Ce dernier comprend tout d'abord un panneau extérieur 13, ou peau, sensiblement plan et réalisé en polypropylène.

L'ouvrant comprend également un panneau intérieur 14 en polypropylène mélangé à des fibres de verre, dont la forme en relief lui permet de remplir une fonction structurelle.

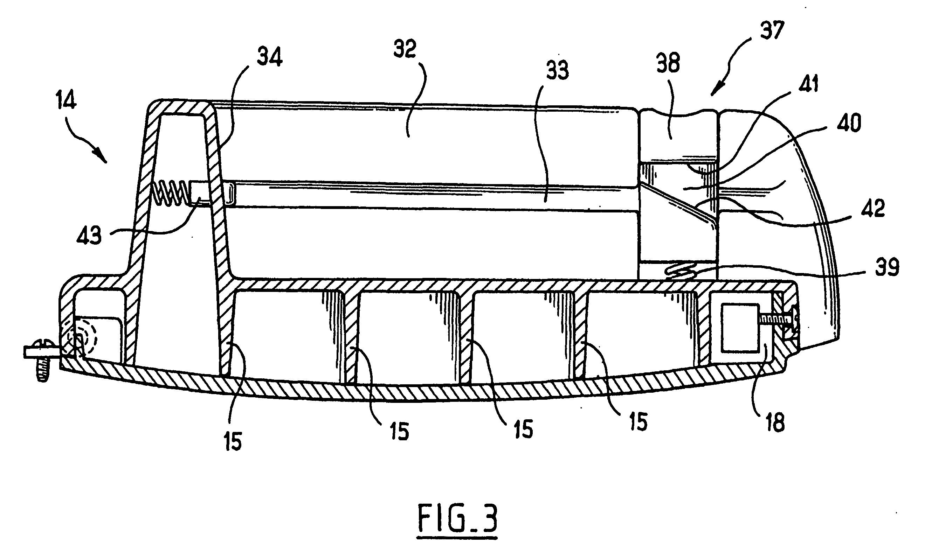

En effet, le panneau intérieur 14 est globalement plat mais comporte des nervures 15, visibles à la figure 3, un montant central 16 en saillie du reste du panneau, ainsi qu'un encadrement partiel constitué par des bords latéraux 17a et un bord inférieur 17b.

Ce montant 16 et cet encadrement partiel 17a, 17b forment, avec les nervures 15, la structure rigide du panneau.

Entre les deux panneaux intérieur 14 et extérieur 13, l'ouvrant comporte un cadre 18 en aluminium qui renforce le panneau intérieur dans ses parties structurelles constituées par le montant central et l'encadrement partiel et qui fournit des points d'accrochage pour la reprise des efforts subis par l'ouvrant.

Ces points d'accrochage sont les charnières de l'ouvrant, la serrure, les points d'ancrage des équilibreurs et les câbles de retenue, comme cela sera décrit ultérieurement.

Les charnières de l'ouvrant sont solidaires du cadre métallique, sous la forme d'un prolongement 19 terminé par un axe de rotation qui pénètre dans un orifice correspondant prévu dans l'encadrement 12 de l'ouverture du véhicule.

La serrure 21 de l'ouvrant est également solidaire du cadre métallique 18, sur lequel elle est directement montée par des vis (non représentées).

Les équilibreurs 22 sont des vérins qui sont assujettis d'une part à l'encadrement 12 de l'ouverture, d'autre part à un axe 23 situé au-delà du palier 20 par rapport à l'ouvrant et qui servent à compenser le poids de l'ouvrant pour faciliter ses manipulations.

Des câbles de retenue 24 sont en outre fixés de part et d'autre de l'ouvrant, entre l'encadrement 12 et le cadre métallique 18 de l'ouvrant, assurant ainsi une bonne résistance à la charge de l'ouvrant.

Le panneau intérieur offre, en plus de sa fonction de pièce structurelle de l'ouvrant, un certain nombre de fonctions qui vont maintenant être décrites.

Dans le bord inférieur 17b de chaque logement, une prise 25 de courant électrique est prévue pour fournir du courant en cas d'utilisation d'un appareil électrique lorsque ledit logement est dégagé, l'ouvrant étant ouvert ou fermé.

Une lampe de signalisation 26 est encastrée à l'extrémité du montant 16 et sert à matérialiser l'ouvrant lorsque ce dernier est ouvert et que le véhicule se déplace, pour avertir les véhicules qui suivent du danger que constitue l'ouvrant dépassant du véhicule.

Cette lampe de signalisation 26 est bordée d'un marquage réfléchissant 27 pour en accroître l'efficacité.

Une poignée 28 est ménagée dans le montant pour faciliter la fermeture de l'ouvrant lorsqu'il se trouve en position ouverte, notamment depuis l'intérieur du véhicule.

De part et d'autre de son montant central 16, le panneau intérieur 14 définit deux logements 29 qui sont délimités par les bords 17a et 17b et dont le fond 30 est constitué par la partie plate du panneau.

Chacun de ces logements 29 est destiné à recevoir un module 31.

Les différents modules utilisables dans l'ouvrant sont notamment un siège, une tablette de pique-nique, un réchaud, une glacière, un appui-tête "oreiller", un support d'éclairage, une rampe de déchargement, un compartiment de stockage, une mallette, une boîte à outils, un support d'appareils électriques tels qu'un ordinateur ou un appareil de mesure, qui peuvent être alimentés par la prise de courant, une écritoire, un support de fixation pour objets longs ou fragiles, un coffret simple ou double sur toute la largeur du hayon.

Pour simplifier le dessin, on a représenté ici un module 31 en forme de parallélépipède qui s'intègre dans l'épaisseur de chaque logement.

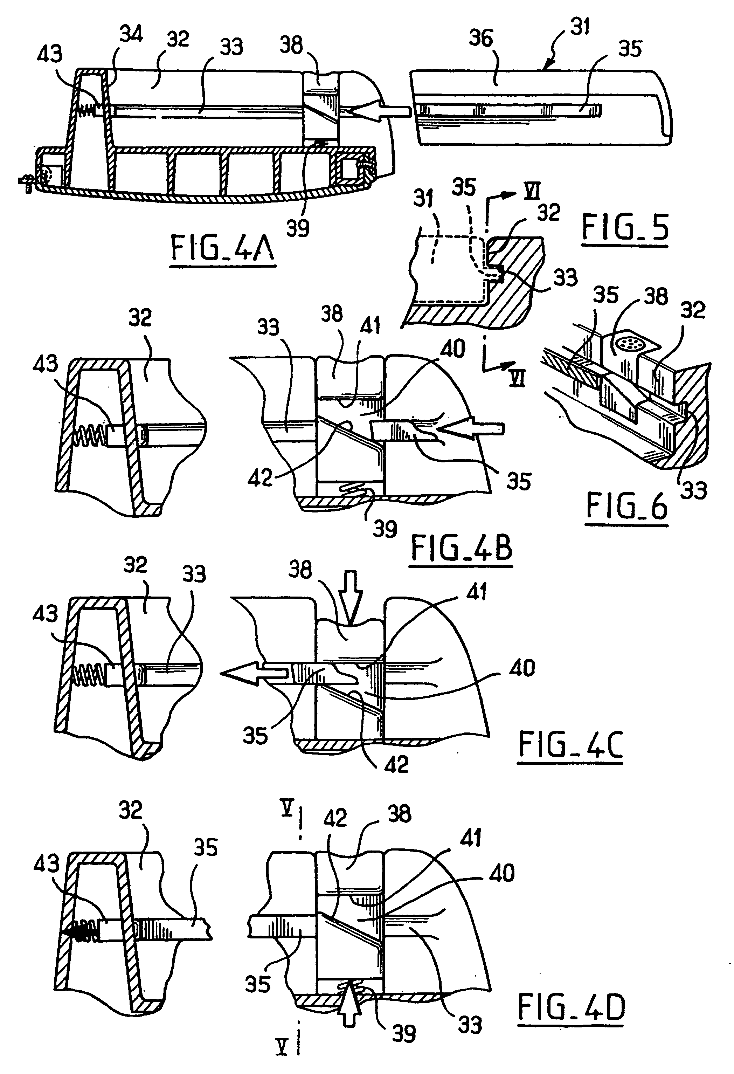

Le mode de fixation du module 31 dans le logement 29, qui va maintenant être décrit en référence aux figures 4A à 4D, 5 et 6, pourrait naturellement convenir à tout autre type de module.

Les parois latérales 32 de chaque logement comportent des rainures 33 de glissement issues de moulage s'étendant depuis le côté ouvert du logement, qui se trouve en haut lorsque l'ouvrant est fermé, jusqu'à la paroi inférieure 34 de chaque logement.

Cette rainure 33 est destinée à recevoir un patin 35 en saillie de la paroi laté-rale 36 du module 31, patin qui glisse dans la rainure 33 et guide le module lors de son insertion dans le logement, par un mouvement de translation de la droite vers la gauche par rapport à la figure 3.

Au voisinage de son embouchure, la rainure 33 est interrompue par une cheminée 37 qui retient un loquet de verrouillage 38, constitué par une pièce tubulaire de section carrée, s'étendant sur presque toute la hauteur de la cheminée, et repoussée vers l'extérieur de la cheminée, c'est-à-dire vers le haut par rapport à la figure 3, par un ressort hélicoïdal 39 interposé entre le fond de la cheminée et la base du loquet.

A mi-hauteur du loquet 38, est ménagé un dégagement 40 délimité supérieurement par un bord 41 parallèle à la rainure et inférieurement par un bord 42 incliné qui, lorsque le loquet 38 est au repos, prend naissance en dessous de la rainure 33 du côté de l'embouchure de cette dernière et se termine au-dessus de ladite rainure du côté opposé.

Dans sa position de repos, le loquet 38 se trouve à affleurement de la face supérieure du montant 16, où il comporte une forme en creux destinée à faciliter l'application d'une force d'appui par les doigts d'un utilisateur.

Lorsque, sous l'effet d'une telle force, le loquet 38 est enfoncé, le bord incliné inférieur 42 du dégagement 40 passe intégralement en dessous de la rainure 33, ce qui permet le passage du patin du module.

En revanche, lorsque le loquet 38 est au repos, c'est-à-dire repoussé vers le haut par le ressort 39, le patin 35 ne peut pas passer.

On comprend que dans le sens de l'insertion du module, comme représenté à la figure 4B, le bord incliné inférieur 42 du dégagement sert de came et la poussée exercée sur le module se transmet au loquet qui s'enfonce et libère le passage pour le patin, puis revient au repos.

En revanche, une fois le module en place, si l'on n'exerce aucune force d'appui sur le loquet, celui-ci demeure en position et s'oppose au passage du patin, et retient par conséquent le module dans son logement, comme on le voit aux figures 4D et 6.

En enfonçant le loquet 38, on libère le passage pour le patin 35 et le module 31 ressort, sous l'action d'un poussoir à ressort 43 logé à l'extrémité fermée de la rainure 33.

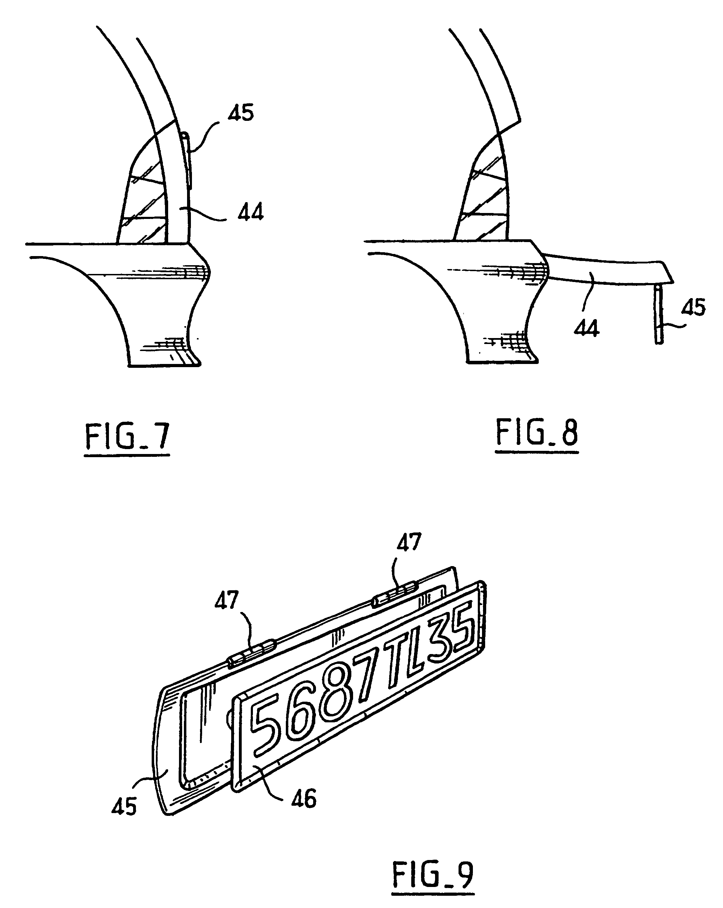

Aux figures 7 à 9, on a représenté un mode de réalisation dans lequel l'ouvrant 44 d'un véhicule présente sensiblement la même structure que dans le mode de réalisation précédent, mais est muni en outre d'une platine 45 qui supporte une plaque minéralogique 46.

Cette platine 45 est montée sur le panneau extérieur de l'ouvrant par des charnières 47 à axe horizontal qui laissent la platine libre de pivoter sous l'effet de son propre poids, de sorte que ladite platine demeure en position verticale quelle que soit la position de l'ouvrant.

La platine 45 est néanmoins verrouillée en position "rentrée" lorsque l'ouvrant inférieur est fermé, grâce à un dispositif de verrouillage (non représenté) qui est couplé à la commande d'ouverture de l'ouvrant.

Ainsi, tant que l'ouvrant inférieur est fermé, la platine demeure collée au panneau extérieur en dépit des vibrations du véhicule.

En revanche, lorsque l'ouvrant est ouvert par actionnement de sa commande d'ouverture, la platine 45 se libère et peut prendre la position représentée à la figure 8, position dans laquelle elle peut également être immobilisée par tout moyen approprié.

Dans une autre variante non représentée, les charnières 47 comportent un mécanisme bi-stable qui les fixe dans deux positions angulaires écartées de 90°, de sorte que la platine est retenue angulairement par rapport à l'ouvrant, afin d'éviter qu'elle n'oscille lors des déplacements du véhicule. Dans ce cas, le positionnement de la platine en fonction de l'ouverture ou de la fermeture de l'ouvrant peut s'effectuer à la main.

Le système d'éclairage de plaque peut également être supporté par la platine 45 afin de permettre une utilisation de nuit du véhicule, ouvrant abaissé.

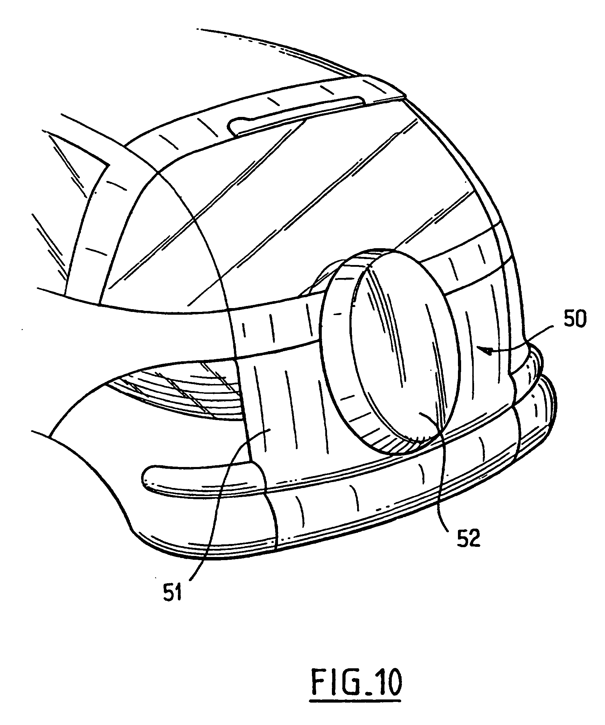

Dans le mode de réalisation de la figure 10, l'ouvrant inférieur 50 comporte un panneau extérieur 51 amovible dans lequel est ménagée une forme en relief 52 correspondant à l'encombrement d'une roue de secours.

Le panneau intérieur (non visible) comporte le même dégagement à l'intérieur du véhicule.

Dans ce mode de réalisation, la fonction supplémentaire principale de l'ouvrant, en plus de sa fonction d'obturation de l'arrière du véhicule, est d'accueillir la roue de secours en la protégeant des agressions extérieures et en contribuant à l'amélioration de l'esthétique du véhicule.

Le panneau extérieur est déverrouillable pour permettre l'accès à la roue de secours.

La commande du déverrouillage se trouve à l'intérieur du véhicule, par exemple sur le panneau intérieur de l'ouvrant.

Il est bien entendu que les modes de réalisation qui viennent d'être décrits ne présentent aucun caractère limitatif et pourront recevoir toute modification désirable sans sortir pour cela du cadre de l'invention.

## Revendications

1. Ouvrant (4 ; 44 ; 50) arrière de véhicule automobile, du type destiné à être installé sur un véhicule automobile en étant monté pivotant autour d'un axe horizontal situé à proximité de son bord inférieur (8), entre une position fermée dans laquelle il obture au moins partiellement l'accès à l'intérieur du véhicule et une position ouverte dans laquelle il est sensiblement horizontal et libère l'accès à l'intérieur du véhicule, **caractérisé par le fait qu'**il comprend un panneau extérieur d'aspect (13 ; 51) et un panneau intérieur structurel (14), ledit panneau intérieur (14) étant réalisé en matière plastique.

2. Ouvrant selon la revendication 1, **caractérisé par le fait que** le panneau intérieur (14) présente une forme en relief, comprenant notamment des nervures, et présente une structure rigide.

3. Ouvrant selon la revendication 1 ou 2, **caractérisé par le fait que** le panneau intérieur (14) est réalisé en polypropylène mélangé à des fibres de verre ou en une matière plastique thermodurcissable et que le panneau extérieur (13 ; 51) est réalisé en une matière thermoplastique.

4. Ouvrant selon l'une quelconque des revendications 1 à 3, **caractérisé par le fait que** l'ouvrant comporte, entre le panneau extérieur (13) et le panneau intérieur (14), un renfort métallique (18) qui reprend une partie des efforts s'exerçant sur l'ouvrant.

5. Ouvrant selon l'une quelconque des revendications 1 à 4, **caractérisé par le fait que** le panneau intérieur (14) comporte des logements (29 ; 52) aptes à recevoir des modules (31) qui s'intègrent au moins partiellement dans l'épaisseur de l'ouvrant et procurent des fonctions spécifiques.

6. Ouvrant selon la revendication 5, **caractérisé par le fait que** les modules (31) sont au nombre de deux et sont répartis de chaque côté d'un montant central (16) réalisé dans le panneau intérieur pour le rigidifier dans la région de la serrure (24) de l'ouvrant.

7. Ouvrant selon l'une quelconque des revendications 5 et 6, **caractérisé par le fait que** le panneau intérieur (14) comporte un moyen de rétention (33, 37, 38, 39) des modules dans leurs logements, ce moyen de rétention étant déverrouillable.

8. Ouvrant selon la revendication 7, **caractérisé par le fait que** le moyen de rétention consiste en une glissière (33) et un loquet (38).

9. Ouvrant selon l'une quelconque des revendications 1 à 8, **caractérisé par le fait que** le panneau extérieur (13) de l'ouvrant (44) supporte une platine (45) articulée autour d'un axe horizontal qui permet à ladite platine de pivoter par rapport à l'ouvrant pour demeurer en position verticale lorsque l'ouvrant pivote de sa position verticale fermée à sa position horizontale ouverte.

10. Ouvrant (50) selon l'une quelconque des revendications 1 à 9, **caractérisé par le fait qu'**il comporte, dans le panneau intérieur et dans le panneau extérieur (51), un dégagement (52) destiné à loger une roue de secours.

## Patentansprüche

1. Teil (4; 44; 50) eines Kraftfahrzeugs zum Öffnen eines Hecks, von jener Art, die dazu bestimmt ist, in ein Kraftfahrzeug eingebaut zu werden, indem das Teil zum Öffnen so montiert wird, dass es sich um eine horizontale Achse, die sich nahe seines unteren Rands (8) befindet, zwischen einer geschlossenen Position, in der es wenigstens teilweise den Zugang zum Inneren des Fahrzeugs verschließt, und einer offenen Position dreht, in der es sich im wesentlichen in horizontaler Lage befindet und den Zugang zu dem Inneren des Fahrzeugs freigibt, **dadurch gekennzeichnet, dass** es eine äußere Dekorplatte (13; 51) und eine innere Strukturplatte (14) umfasst, wobei besagte innere Platte (14) aus Kunststoff hergestellt ist.

2. Teil zum Öffnen nach Anspruch 1, **dadurch gekennzeichnet, dass** die innere Platte (14) eine Reliefform aufweist, die insbesondere Rippen umfasst, und eine starre Struktur hat.

3. Teil zum Öffnen nach Anspruch 1 oder 2, **dadurch gekennzeichnet, dass** die innere Platte (14) aus mit Glasfasern vermischtem Polypropylen oder aus einem duroplastischen Kunststoff hergestellt ist und dass die äußere Platte (13; 51) aus einem Thermoplast gefertigt ist.

4. Teil zum Öffnen nach einem der Ansprüche 1 bis 3, **dadurch gekennzeichnet, dass** das Teil zum Öffnen, zwischen der äußeren Platte (13) und der inneren Platte (14), eine metallene Verstärkung (18) aufweist, die einen Teil der Belastungen aufnimmt, die auf das Teil zum Öffnen ausgeübt werden.

5. Teil zum Öffnen nach einem der Ansprüche 1 bis 4, **dadurch gekennzeichnet, dass** die innere Platte (14) Lager enthält (29; 52), die zur Aufnahme von Modulen (31) geeignet sind, die sich zumindest teilweise in die Dicke des Teils zum Öffnen integrieren und spezifische Funktionen bieten.

6. Teil zum Öffnen nach Anspruch 5, **dadurch gekennzeichnet, dass** sich die Anzahl der Module (31) auf zwei beläuft und dass diese auf jede Seite einer Mittelwand (16) verteilt sind, welche in der inneren Platte angelegt ist, um diese in dem Bereich des Schlosses (24) des Teils zum Öffnen starr zu machen.

7. Teil zum Öffnen nach einem der Ansprüche 5 und 6, **dadurch gekennzeichnet, dass** die innere Platte (14) ein Mittel zum Festhalten (33, 37, 38, 39) der Module in ihren Lagern aufweist, wobei dieses Mittel zum Festhalten entriegelbar ist.

8. Teil zum Öffnen nach Anspruch 7, **dadurch gekennzeichnet, dass** das Mittel zum Festhalten aus einer Gleitführung (33) und einer Schnapparretierung (38) besteht.

9. Teil zum Öffnen nach einem der Ansprüche 1 bis 8, **dadurch gekennzeichnet, dass** die äußere Platte (13) des Teils (44) zum Öffnen eine Platte (45) hält, die um eine horizontale Achse bewegbar befestigt ist, welche besagter Platte (45) gestattet, sich im Bezug auf das Teil zum Öffnen zu drehen, um in vertikaler Lage zu bleiben, wenn sich das Teil zum Öffnen aus seiner vertikalen geschlossenen Position in seine horizontale offene Position dreht.

10. Teil (50) zum Öffnen nach einem der Ansprüche 1 bis 9, **dadurch gekennzeichnet, dass** dieses, in der inneren Platte und in der äußeren Platte (51), eine freie Stelle (52) aufweist, die zum Lagern eines Reserverads bestimmt ist.

## Claims

1. A motor vehicle tailgate (4 ; 44 ; 50) of the type for installing on a motor vehicle so as to pivot about a horizontal axis situated close to the bottom edge (8) of the tailgate between a closed position in which it closes access to the inside of the vehicle, at least in part, and an open position in which it is substantially horizontal and releases access to the inside of the vehicle, **characterized by** the fact that the tailgate comprises an appearance-defining outer panel (13 ; 51) and a structural inner panel (14), said inner panel (14) being made of a plastics material.

2. A tailgate according to claim 1, **characterized by** the fact that the inner panel (14) presents shapes in relief, in particular including ribs, and presents a structure that is rigid.

3. A tailgate according to claim 1 or 2, **characterized by** the fact that the inner panel (14) is made of polypropylene mixed with glass fibers or of a thermosetting plastics material, and that the outer panel (13 ; 51) is made of a thermoplastic material.

4. A tailgate according to any one of claims 1 to 3, **characterized by** the fact that the tailgate includes metal reinforcement (18) between the outer panel (13) and the inner panel (14), which reinforcement takes up a fraction of the forces that are exerted on the tailgate.

5. A tailgate according to any one of claims 1 to 4, **characterized by** the fact that the inner panel (14) has housings (29 ; 52) suitable for receiving modules (31) that are received at least in part in the thickness of the tailgate and that provide special functions.

6. A tailgate according to claim 5, **characterized by** the fact that the modules (31) are two in number and are disposed on either side of a central upright (16) formed in the inner panel to stiffen it in the region of the lock (24) of the tailgate.

7. A tailgate according to any one of claims 5 and 6, **characterized by** the fact that the inner panel (14) includes retention means (33 ; 37 ; 38 ; 39) for retaining the modules in their housings, the retention means being releasable.

8. A tailgate according to claim 7, **characterized by** the fact that each retention means is constituted by a slideway (33) and a latch (38).

9. A tailgate according to any one of claims 1 to 8, **characterized by** the fact that the outer panel (13) of the tailgate (44) supports a flap (45) hinged about a horizontal axis enabling said flap to pivot relative to the tailgate so that the flap remains in a vertical position when the tailgate pivots from its closed, vertical position to its open, horizontal position.

10. A tailgate (50) according to any one of claims 1 to 9, **characterized by** the fact that it includes respective setbacks (52) in the inner panel and in the outer panel (51) for the purpose of receiving a spare wheel.
